# EUROPEAN PATENT SPECIFICATION

(11) **EP 4 307 452 B1**
(45) Date of publication and mention of the grant of the patent: **01.04.2026**
(21) Application number: 23756526.2
(22) Date of filing: 17.01.2023
(51) Int. Cl.: H01M 50/342, H01M 50/375, H01M 50/211

(54) **BATTERY MODULE AND BATTERY PACK INCLUDING THE SAME**
BATTERIEMODUL UND BATTERIEPACK MIT DIESEM MODUL
MODULE DE BATTERIE ET BLOC-BATTERIE LE COMPRENANT

(30) Priority: 17.02.2022 KR 20220020768
(43) Date of publication of application: 17.01.2024
(73) Proprietor: LG Energy Solution, Ltd., Seoul 07335 (KR)
(72) Inventor: BAEK, Soyoung, Daejeon 34122 (KR)
(74) Representative: Plasseraud IP
(86) International application number: PCT/KR2023/000770
(87) International publication number: WO 2023/158113

(56) References cited:
- WO-A1-2017/048020
- JP-A- 2016 201 333
- KR-A- 20080 015 164
- KR-A- 20120 009 592
- KR-A- 20180 118 949
- KR-A- 20210 054 825
- KR-A- 20210 075 476
- US-A1- 2013 095 356
- US-A1- 2022 013 839

## Description

### [TECHNICAL FIELD]

### Cross Citation with Related Application(s)

This application claims the benefit of Korean Patent Application No. 10-2022-0020768 filed on February 17, 2022 with the Korean Intellectual Property Office.

The present disclosure relates to a battery module and battery pack including the same and more particularly, to a battery module with improved stability and a battery pack including the same.

### [BACKGROUND]

With the technology development and increased demand for mobile devices, demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In small mobile devices, one, or two, or three battery cells are used per device, while medium- or large-sized devices such as vehicles require high power and large capacity. Therefore, a medium- or large-sized battery module having a plurality of battery cells electrically connected to one another is used.

Since medium- or large-sized battery modules are preferably manufactured with as small a size and weight as possible, a prismatic battery, a pouch-type battery, or the like, which can be stacked with high integration and has a small weight relative to capacity, is mainly used as a battery cell of the medium- or large-sized battery modules. Such a battery module has a structure in which a plurality of cell assemblies including a plurality of battery cells are connected in series to obtain high output. Further, the battery cell includes positive and negative electrode current collectors, a separator, an active material, an electrolyte, and the like, and thus can be repeatedly charged and discharged through an electrochemical reaction between components.

Meanwhile, in recent years, amid the growing need for large-capacity structures including their utilization as an energy storage source, there is an increasing demand for battery packs having a multi-module structure formed by assembling a plurality of battery modules in which a plurality of secondary batteries are connected in series and/or in parallel.

Further, when a plurality of battery cells are connected in series or in parallel to configure a battery pack, it is common to configure a battery module composed of at least one battery cell first and then configure a battery pack by using at least one battery module and adding other components.

JP2016201333A concerns a battery pack including battery pack case storing a plurality of battery cells and including a plurality of ventilation parts.

US2013/0095356 concerns a cell module.

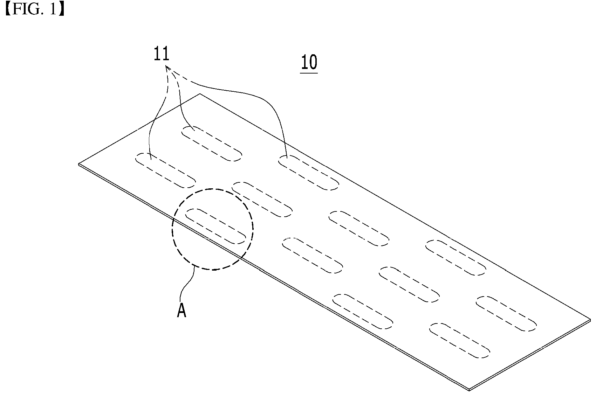

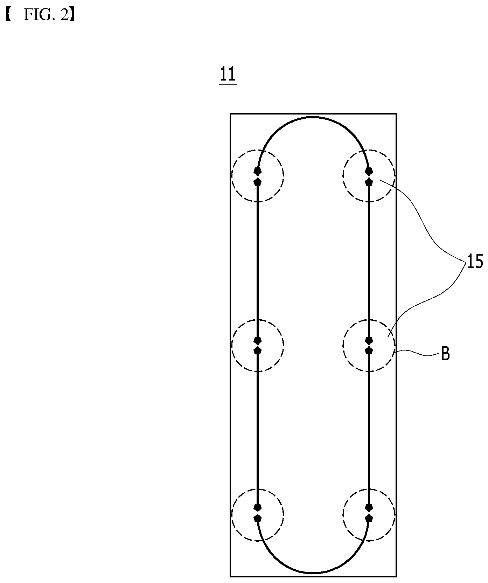

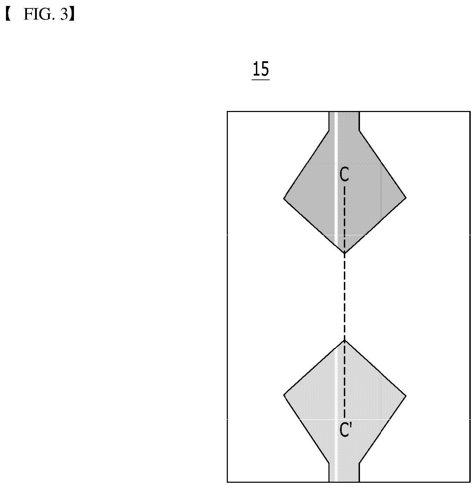

FIG. 1 is a view showing a rupture sheet included in a conventional battery module. FIG. 2 is an enlarged view of a section A of FIG. 1. FIG. 3 is an enlarged view of a section B of FIG. 2.

Referring to FIGS. 1 to 3, the rupture sheet 10 of the conventional battery module may include a plurality of venting portions 11, and the venting portion 11 may include a rupture portion 15. Further, the rupture portion 15 may be formed in a notch shape as shown in FIG. 3.

More specifically, the rupture sheet 10 may have a bent portion 11 formed as shown in FIG. 2, and the rupture portion 15 may be formed in a state of being connected to the rupture sheet 10 without being cut. At this time, as the gas is discharged to the outside when venting of the gas inside the battery cell occurs, the rising pressure may cause the notch profile to cut along section line C-C' in FIG. 3. Therefore, as the rupture portion 15 is ruptured, the venting portion 11 of the rupture sheet 10 forms a venting hole so that gas inside the battery cell can be vented to the outside.

However, since the rupture sheet 10 of the conventional battery module should be formed to a fairly thin thickness because the notch shape must be cut along the cutting line C-C' in FIG. 3 during gas venting inside the battery cell. Further, the conventional ruptured sheet 10 is damaged by external vibration and shock during use of a general battery module even if it is not a gas vent inside the battery cell, so that the rupture portion 15 is highly likely to be cut. In this case, there is a possibility that even though the battery cell is not vented, a vent hole is formed and the internal structure of the battery module is exposed to the outside, which may lead to deterioration of the stability.

Therefore, there is a need for a new structure in which the rupture sheet 10 is ruptured only during gas venting of the battery cell, thus venting gas inside the battery cell, and the rupture sheet 10 is not ruptured during normal use of a battery module, thus capable of improving the stability of the battery module.

### [DETAILED DESCRIPTION OF THE INVENTION]

### [Technical Problem]

It is an object of the present disclosure to provide a battery module that can form a venting hole only during gas venting inside the battery module, and a battery pack comprising the same.

However, the objects of the present disclosure are not limited to the aforementioned objects, and other objects which are not mentioned herein should be clearly understood by those skilled in the art from the following detailed description and the accompanying drawing.

### [Technical Solution]

According to one aspect of the present invention, there is provided a battery module comprising: a battery cell stack in which a plurality of battery cells are stacked; a module frame that houses the battery cell stack; and a rupture sheet formed between the battery cell stack and the module frame, wherein the rupture sheet comprises a shape memory alloy, SMA.

The module frame is formed with a plurality of holes, and the portion of the rupture sheet corresponding to the position of the hole contains the shape memory alloy.

The rupture sheet includes a plurality of rupture layers; and a rupture induction member formed between the plurality of rupture layers, wherein the rupture induction member is formed of the shape memory alloy and is suitable to expand to deform and cut the rupture layers.

The rupture induction member may be formed in a portion of the rupture sheet corresponding to the position of the hole in the module frame.

The rupture induction member expands during gas venting of the battery module, and the rupture induction member expands to deform the rupture layer, and a venting hole may be formed on the rupture sheet.

The rupture induction member may expand as the shape memory alloy expands.

The venting hole may be formed in plural numbers.

The plurality of venting holes are formed in a portion of the rupture sheet corresponding to the position of the hole, and the plurality of venting holes formed in the portion of the rupture sheet corresponding to the position of the hole may form a venting portion.

The rupture induction member may expand when a temperature of 100 degrees or more is applied to the rupture induction member.

The rupture sheet may be formed between the upper portion of the battery cell stack and the module frame.

According to one embodiment of the present disclosure, there is provided a battery pack comprising the battery module.

### [Advantageous Effects]

A battery module according to embodiments of the present disclosure is not formed with a venting hole during normal operation of the battery module, but a venting hole is formed on the rupture sheet only in the case of gas venting inside the battery module, thereby capable of improving the stability of the battery module.

In addition, as venting holes are not formed during normal use of the battery module, it is possible to minimize exposure and damage inside the battery module and minimize performance deterioration of the battery module.

The effects of the present disclosure are not limited to the effects mentioned above and additional other effects not described above will be clearly understood from the description of the appended claims by those skilled in the art.

### [BRIEF DESCRIPTION OF THE DRAWINGS]

FIG. 1 is a view showing a rupture sheet included in a conventional battery module;
FIG. 2 is an enlarged view of a section A of FIG. 1;
FIG. 3 is an enlarged view of a section B of FIG. 2;
FIG. 4 is an exploded perspective view of a battery module according to one embodiment of the present disclosure;
FIG. 5 is a view showing a state in which the components of FIG. 4 are coupled with each other;
FIG. 6 is a view showing one of a plurality of venting portions formed on a ruptured sheet included in the battery module of the present invention.
FIG. 7 is an enlarged view of part D of FIG. 6, which shows a state before rupture of a rupture sheet;
FIG. 8 is a diagram showing a state in which the rupture sheet of FIG. 7 is ruptured due to gas venting inside the battery cell.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

The terms "first," "second," etc. are used to explain various components, but the components should not be limited by the terms. These terms are only used to distinguish one component from the other component.

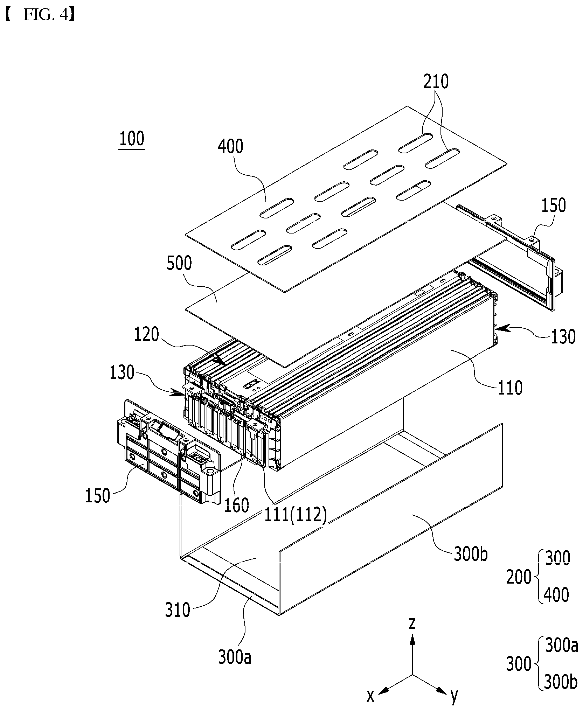

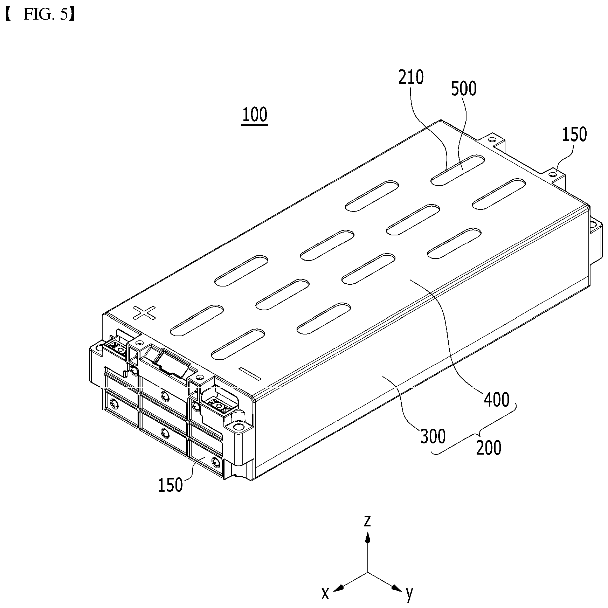

Now, the battery module according to the present disclosure will be described with reference to FIGS. 4 and 5.

FIG. 4 is an exploded perspective view of a battery module according to one embodiment of the present disclosure. FIG. 5 is a view showing a state in which the components of FIG. 4 are coupled with each other.

Referring to FIGS. 4 and 5, the battery module 100 according to the present embodiment includes a battery cell stack 120 in which a plurality of battery cells 110 are stacked, a module frame 200 that houses the battery cell stack 120, and a rupture sheet 500 formed between the battery cell stack 120 and the module frame 200.

First, the battery cell 110 according to the present embodiment may be a pouch-type battery cell, and may be formed in a rectangular sheet-like structure. As an example, the battery cell 110 has a structure in which two electrode leads 111 and 112 face each other and protrude from one end and the other end of the cell main body, respectively. That is, the battery cell 110 includes electrode leads 111 and 112 protruding in mutually opposite directions. More specifically, the electrode leads 111 and 112 are connected to an electrode assembly (not shown) and protrude from the electrode assembly (not shown) to the outside of the battery cell 110.

Such battery cells 110 may be formed in plural numbers, and the plurality of battery cells 110 are stacked so as to be electrically connected to each other, thereby forming a battery cell stack 120. In particular, as shown in FIG. 4, a plurality of battery cells 110 may be stacked along a direction parallel to the y-axis. Accordingly, the electrode leads 111 and 112 may protrude in the x-axis direction and the -x-axis direction, respectively.

Meanwhile, the module frame 200 includes a U-shaped frame 300 which is opened at its upper, front and rear surfaces and covers the lower portion and both side portions of the battery cell stack 120, and an upper plate 400 that covers the upper portion of the battery cell stack 120. At this time, the U-shaped frame 300 may include a bottom portion 300a supporting the lower portion of the battery cell stack 120, and side surface portions 300b each extending upward from both ends of the bottom portion 300a.

However, the module frame 200 is not limited thereto, and can be replaced with a frame having another shape such as an L-shaped frame or a mono-frame surrounding the battery cell stack 120 except the front and rear surfaces.

The battery cell stack 120 housed inside the module frame 200 can be physically protected through the module frame 200.

The upper plate 400 can cover the opened upper side surface of the module frame 200.

The end plate 150 can cover the front and rear surfaces of the battery cell stack 120 that are opened in the module frame 200. The end plate 150 can be weld-coupled with the front and rear end edges of the upper plate 400 and the front and rear end edges of the module frame 200.

A busbar frame 130 can be formed between the end plate 150 and the front and rear surfaces of the battery cell stack 120. The busbar frame 130 can cover the portion of the battery cell stack 120 exposed from the module frame 200. Also, the plurality of busbars 160 mounted to the busbar frame 130 are formed protrusively from the battery cells 110, and can be connected with the electrode leads 111 and 112 mounted on the busbar frame 130. At this time, the busbar 160 may be formed with a slot through which the electrode leads 111 and 112 pass. Therefore, the electrode leads 111 and 112 and the busbar 160 passing through the slot of the busbar 160 may contact with each other.

Further, the battery module 100 further includes a thermal conductive resin layer 310 located between the lower surface of the battery cell stack 120 and the bottom portion of the module frame 200, that is, the bottom portion 300a of the frame member 300, wherein the first thermal conductive resin layer 310 may play a role of transferring heat generated in the battery cell 110 to the bottom of the battery module 100 and fixing the battery cell stack 120.

As previously described, since the rupture sheet 10 of the conventional battery module should be formed to have a fairly thin thickness because the notch shape must be cut along the cutting line C-C' in FIG. 3 during gas venting inside the battery cell. Further, the conventional rupture sheet 10 is damaged by external vibration and shock during normal use of a battery module even if it is not a gas vent inside the battery cell, so that the rupture portion 15 is highly likely to be cut. In this case, there is a possibility that a vent hole is formed and the internal structure of the battery module is exposed to the outside even though the battery cell is not vented, which may lead to deterioration of the stability.

Therefore, there is a need for a new structure in which the rupture sheet 10 is ruptured only during gas venting of the battery cell, thus venting gas inside the battery cell, and the rupture sheet 10 is not ruptured during normal use of a battery module, thus capable of improving the stability of the battery module.

Next, the rupture sheet 500 of the battery module 100 according to the present embodiment will be described in more detail.

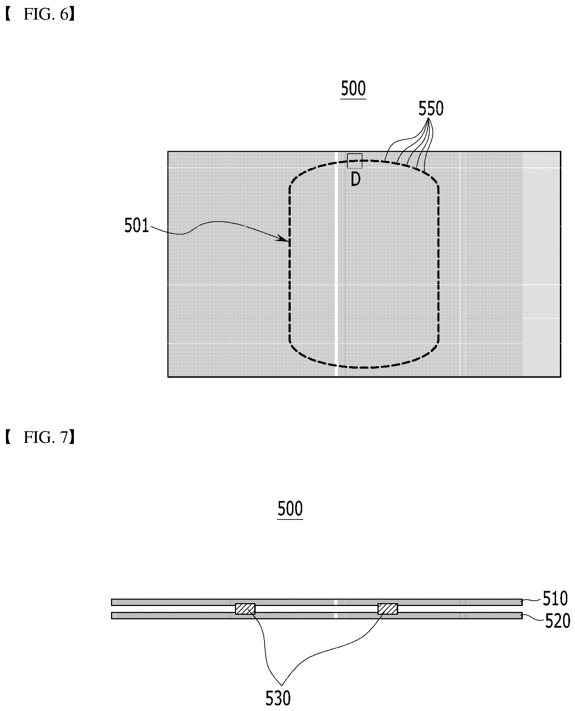

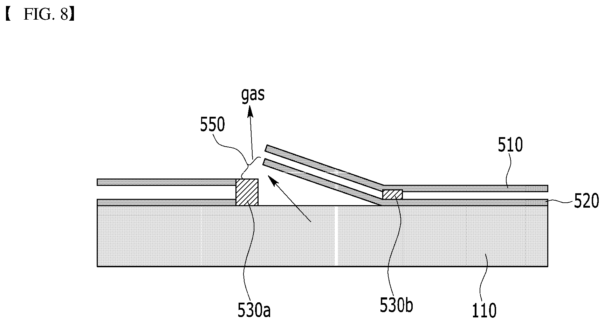

FIG. 6 is a view showing one of a plurality of venting portions formed on a ruptured sheet included in the battery module of the present invention. FIG. 7 is an enlarged view of part D of FIG. 6, which shows a state before rupture of a rupture sheet. FIG. 8 is a diagram showing a state in which the rupture sheet of FIG. 7 is ruptured due to gas venting inside the battery cell.

Referring to FIGS. 6 to 8, the rupture sheet 500 of the battery module 100 according to the present embodiment is formed between the battery cell stack 120 and the module frame 200. More specifically, the rupture sheet 500 may be formed between the upper portion of the battery cell stack 120 and the upper portion of the module frame 200. Further, the rupture sheet 500 included in the battery module 100 according to the present embodiment includes a shape memory alloy (SMA).

The module frame 200 may formed with a hole 210, and a plurality of holes 210 may be formed on the module frame 200. At this time, the hole 210 may be formed on the upper portion of the module frame 200, that is, on the upper plate 400. That is, the module frame 200 is formed with a plurality of holes 210, and the hole 210 may be formed to pass through the upper portion of the module frame 200. Therefore, gas inside the battery module can be smoothly discharged to the outside through the hole 210 formed in the module frame 200.

Further, a venting portion 501 may be formed at a portion of the rupture sheet 500 corresponding to the position of the hole 210. At this time, the venting portion 501 has a plurality of venting holes 550 formed in the portion of the rupture sheet 500 corresponding to the shape of the hole 210 of the module frame 200 as will be described later, thereby forming the venting portion 501. Thus, the venting portion 501 may be formed in a portion of the rupture sheet 500 corresponding to the position of the edge portion of the hole 210. Therefore, a venting portion 501 formed by gathering a plurality of venting holes 550 is formed on the rupture sheet 500, and the venting portion 501 is also formed in plural numbers on the rupture sheet, so that multiple venting paths can be formed. In addition, gas generation in the battery module and rapid gas discharge during venting may be possible through the venting path.

At this time, the venting portion 501 of the rupture sheet 500 may include the shape memory alloy. That is, among the portions of the rupture sheet 500, the portion of the rupture sheet 500 corresponding to the position of the hole 210, that is, the bent portion 501 may include the shape memory alloy.

Meanwhile, the rupture sheet 500 may include a plurality of rupture layers 510 and 520 including a first rupture layer 510 and a second rupture layer 520, and a rupture induction member 530 formed between the plurality of rupture layers 510 and 520. The plurality of rupture layers 510 and 520 may include a larger number of rupture layers, but as an example, FIG. 7 including the first rupture layer 510 and the second rupture layer 520 will be mainly described. At this time, for the rupture sheet 500, the venting portion 501, which is the portion of the rupture sheet 500 corresponding to the hole 210 of the module frame 200 among the areas of the rupture sheet 500, may include a plurality of rupture layers 510 and 520 and a rupture induction member 530. Therefore, the rupture induction member 530 may be formed in a portion of the rupture sheet 500 corresponding to the position of the hole 210 of the module frame 200.

The rupture induction member 530 formed between the first rupture layer 510 and the second rupture layer 520 may be formed to contact the first rupture layer 510 and the second rupture layer 520, respectively. Therefore, the shape of the first rupture layer 510 and the second rupture layer 520 can also be deformed, ruptured and/or cut by changing the shape of the rupture induction member 530.

Further, the first rupture layer 510 and the second rupture layer 520 may be formed of a plate-shaped sheet, but are not limited thereto.

At this time, the rupture induction member 530 may include the shape memory alloy. More specifically, the rupture induction member 530 includes the shape memory alloy or is formed of the shape memory alloy, or may expand as the shape memory alloy expands. That is, when heat of a certain temperature or higher is applied to the rupture sheet 500, the rupture and cutting of the rupture sheet 500 may be induced by the expansion of the rupture induction member 530. This may be based on the feature of returning to a high-temperature shape when heat is applied since the shape memory alloy remembers the shape at a high temperature even if it exists in a different shape at a low temperature.

Referring to FIGS. 7 and 8, heat above a predetermined temperature may be generated when the gas inside the battery cell 110 and the battery module 100 is vented. More specifically, heat having a temperature of at least 100 degrees or higher may also be generated during the gas venting. Therefore, when the gas is vented, the heat may be transferred to the rupture induction member 530.

The rupture induction member 530 may include expanding when a temperature of at least 100 degrees or more is applied. Therefore, the rupture induction member 530 may expand when gas is vented from the battery cell or battery module. At this time, the rupture induction member 530 expanded by the heat transferred during the gas venting may be referred to as a first rupture induction member 530a, and the rupture induction member 530 that has not yet expanded may be referred to as a second rupture induction member 530b.

Referring to FIG. 8, the first rupture induction member 530a may be expanded by the heat to cut partial regions of the first rupture layer 510 and the second rupture layer 520. That is, the rupture induction member 530 may expands to deform and cut the rupture layers 510 and 520. Thereby, a venting hole 550 is formed on the rupture sheet 500 by the deformed and cut first rupture layer 510 and the second rupture layer 520, so that gas inside the battery module 100 can be discharged to the outside. At this time, referring to FIGS. 6 and 8, the shape of the venting hole 550 may be formed by cutting the first rupture layer 510 and the second rupture layer 520 and lifting them upward. Therefore, as shown in FIG. 6, the venting hole 550 may be formed along a solid black line or a curved shape, but the shape of the venting hole 550 is not limited thereto.

In particular, when the heat is also transferred to the second rupture induction member 530b, the first rupture layer 510 and the second rupture layer 520 can also be cut by the second rupture induction member 530b, whereby the venting hole 550 can be formed to have a larger area than the size of the venting hole 550 when only the first rupture induction member 530a is ruptured.

Further, the rupture sheet 500, particularly, the vent 501 on the rupture sheet 500 may include a plurality of rupture induction members 530, so that a plurality of the venting holes 550 can be formed on the rupture sheet 500 and the venting portion 501.

Further, the rupture induction member 530 may be formed along the shape of the hole 210 of the module frame 200. That is, a plurality of venting holes 550 may be formed along the shape in which the plurality of rupture induction members 530 are formed, and the shape of the venting portion 501 may be formed along the shape in which the plurality of venting holes 550 are formed. In other words, a plurality of venting holes 550 are formed in the portion of the rupture sheet 500 corresponding to the position of the hole 210, and a plurality of venting holes 550 formed in a portion of the rupture sheet 500 corresponding to the position of the hole 210 may form the venting portion 501.

Accordingly, although the venting hole 550 is not formed in the rupture sheet 500 in a normal operating state of the battery module 100, a venting hole 550 is formed on the rupture sheet 500 by the rupture induction member 530 during gas venting inside the battery module 100, so that gas inside the battery module 100 can be effectively discharged to the outside.

Therefore, the rupture sheet 500 included in the battery module 100 according to the present embodiment has the venting hole 550 and the venting portion 501 only when the gas venting of the battery cell 110 and the battery module 100 is performed, so that the stability of the battery module can be improved and the performance of the battery module 100 can be secured.

Next, a battery pack according to another embodiment of the present disclosure will be described.

According to yet another embodiment of the present embodiment, there is provided a battery pack comprising the above-mentioned battery module. In addition, the battery pack of the present disclosure may have a structure in which one or more of the battery modules according to the present embodiment are gathered, and packed together with a battery management system (BMS) and a cooling device that control and manage battery's temperature, voltage, etc.

The battery pack can be applied to various devices. Such a device can be applied to a vehicle means such as an electric bicycle, an electric vehicle, or a hybrid vehicle, but the present disclosure is not limited thereto, and is applicable to various devices that can use a battery module, which is also falls under the scope of the present disclosure.

Although the invention has been shown and described above with reference to preferred embodiments of the present disclosure, the scope of the present disclosure is not limited to specific embodiments described above, and numerous other modifications can be carried out by those skilled in the art, without departing from the scope of the principles of the invention described in the appended claims.

### [Description of Reference Numerals]

100: battery module
110: battery cell
120: battery cell stack
130: busbar frame
150: end plate
160: busbar
200: module frame
300: U-shaped frame
400: upper plate
500: rupture sheet
501: venting portion
510: first rupture layer
520: second rupture layer
530: rupture induction member
550: venting hole

## Claims

1. A battery module (100) comprising:
a battery cell stack (120) in which a plurality of battery cells (110) are stacked;
a module frame (200) that houses the battery cell stack (120); and
a rupture sheet (500) formed between the battery cell stack (120) and the module frame (200),
wherein the rupture sheet (500) comprises a shape memory alloy, SMA,
the module frame (200) is formed with a plurality of holes (210), and
the portion of the rupture sheet (500) corresponding to the position of the hole (210) contains the shape memory alloy,
wherein
the rupture sheet (500) comprises
a plurality of rupture layers (510, 520); and
a rupture induction member (530) formed between the plurality of rupture layers (510, 520),
wherein the rupture induction member (530) is formed of the shape memory alloy and is suitable to expand to deform and cut the plurality of rupture layers (510, 520).

2. The battery module (100) of claim 1, wherein:
the rupture induction member (530) is formed in a portion of the rupture sheet (500) corresponding to the position of the hole (210) in the module frame (200).

3. The battery module (100) of claim 1, wherein:
the rupture induction member (530) is configured to expand during gas venting of the battery module,
and
the rupture induction member (530) is configured to expand to deform the rupture layers, and a venting hole (550) is formed on the rupture sheet (500).

4. The battery module (100) of claim 3, wherein:
the rupture induction member (530) is configured to expand as the shape memory alloy expands.

5. The battery module (100) of claim 3, wherein:
the venting hole (550) is formed in plural numbers.

6. The battery module (100) of claim 5, wherein:
the plurality of venting holes (550) are formed in a portion of the rupture sheet corresponding to the position of the hole (210), and
the plurality of venting holes (550) formed in the portion of the rupture sheet (500) corresponding to the position of the hole is configured to form a venting portion (501).

7. The battery module (100) of claim 1, wherein:
the rupture induction member (530) is configured to expand when a temperature of 100 degrees or more is applied to the rupture induction member (530).

8. The battery module (100) of claim 1, wherein:
the module frame (200) includes a U-shaped frame (300) which is opened at an upper, a front and a rear surfaces and covers a lower portion and two side portions of the battery cell stack (120), and an upper plate (400) is configured to cover the upper portion of the battery cell stack (120), and
wherein the rupture sheet (500) is formed between the upper portion of the battery cell stack (120) and the module frame (200).

9. A battery pack comprising the battery module (100) of claim 1.

## Patentansprüche

1. Batteriemodul (100), umfassend:
einen Batteriezellenstapel (120), in welchem eine Mehrzahl von Batteriezellen (110) gestapelt sind;
einen Modulrahmen (200), welcher den Batteriezellenstapel (120) aufnimmt; und
eine Bruchfolie (500), welche zwischen dem Batteriezellenstapel (120) und dem Modulrahmen (200) gebildet ist,
wobei die Bruchfolie (500) eine Formgedächtnislegierung, SMA - shape memory alloy, umfasst,
der Modulrahmen (200) mit einer Mehrzahl von Löchern (210) gebildet ist und
der Abschnitt der Bruchfolie (500), welcher der Position des Lochs (210) entspricht, die Formgedächtnislegierung enthält,
wobei die Bruchfolie (500) umfasst:
eine Mehrzahl von Bruchschichten (510, 520); und
ein Bruchinduktionselement (530), welches zwischen der Mehrzahl von Bruchschichten (510, 520) gebildet ist,
wobei das Bruchinduktionselement (530) aus der Formgedächtnislegierung gebildet ist und dazu geeignet ist, sich auszudehnen, um die Mehrzahl von Bruchschichten (510, 520) zu verformen und zu schneiden.

2. Batteriemodul (100) nach Anspruch 1, wobei:
das Bruchinduktionselement (530) in einem Abschnitt der Bruchfolie (500) gebildet ist, welcher der Position des Lochs (210) in dem Modulrahmen (200) entspricht.

3. Batteriemodul (100) nach Anspruch 1, wobei:
das Bruchinduktionselement (530) dazu eingerichtet ist, sich während einer Gasentlüftung des Batteriemoduls auszudehnen, und
das Bruchinduktionselement (530) dazu eingerichtet ist, sich auszudehnen, um die Bruchschichten zu verformen, und ein Entlüftungsloch (550) an der Bruchfolie (500) gebildet ist.

4. Batteriemodul (100) nach Anspruch 3, wobei:
das Bruchinduktionselement (530) dazu eingerichtet ist, sich auszudehnen, wenn sich die Formgedächtnislegierung ausdehnt.

5. Batteriemodul (100) nach Anspruch 3, wobei:
das Entlüftungsloch (550) in einer mehrfachen Anzahl gebildet ist.

6. Batteriemodul (100) nach Anspruch 5 wobei:
die Mehrzahl von Entlüftungslöchern (550) in einem Abschnitt der Bruchfolie gebildet ist, welcher der Position des Lochs (210) entspricht, und
die Mehrzahl von Entlüftungslöchern (550), welche in dem Abschnitt der Bruchfolie (500) gebildet ist, welcher der Position des Lochs entspricht, dazu eingerichtet ist, einen Entlüftungsabschnitt (501) zu bilden.

7. Batteriemodul (100) nach Anspruch 1, wobei:
das Bruchinduktionselement (530) dazu eingerichtet ist, sich auszudehnen, wenn eine Temperatur von 100 Grad oder mehr auf das Bruchinduktionselement (530) aufgebracht wird.

8. Batteriemodul (100) nach Anspruch 1, wobei:
der Modulrahmen (200) einen U-förmigen Rahmen (300) umfasst, welcher an einer oberen, einer vorderen und einer hinteren Fläche geöffnet ist und einen unteren Abschnitt und zwei seitliche Abschnitte des Batteriezellenstapels (120) abdeckt, und eine obere Platte (400) dazu eingerichtet ist, den oberen Abschnitt des Batteriezellenstapels (120) abzudecken, und
wobei die Bruchfolie (500) zwischen dem oberen Abschnitt des Batteriezellenstapels (120) und dem Modulrahmen (200) gebildet ist.

9. Batteriepack, umfassend das Batteriemodul (100) nach Anspruch 1.

## Revendications

1. Module de batterie (100) comprenant :
un empilement de cellules de batterie (120) dans lequel une pluralité de cellules de batterie (110) sont empilées ;
un cadre de module (200) qui abrite l'empilement de cellules de batterie (120) ; et
une feuille de rupture (500) formée entre l'empilement de cellules de batterie (120) et le cadre de module (200),
dans lequel la feuille de rupture (500) comprend un alliage à mémoire de forme, SMA (shape memory alloy), le cadre de module (200) est muni d'une pluralité de trous (210), et
la partie de la feuille de rupture (500) correspondant à la position du trou (210) contient l'alliage à mémoire de forme,
dans lequel la feuille de rupture (500) comprend
une pluralité de couches de rupture (510, 520) ; et
un organe d'induction de rupture (530) formé entre la pluralité de couches de rupture (510, 520),
dans lequel l'organe d'induction de rupture (530) est formé de l'alliage à mémoire de forme et est adapté pour se dilater afin de déformer et couper la pluralité de couches de rupture (510, 520).

2. Module de batterie (100) selon la revendication 1, dans lequel :
l'organe d'induction de rupture (530) est formé dans une partie de la feuille de rupture (500) correspondant à la position du trou (210) dans le cadre de module (200).

3. Module de batterie (100) selon la revendication 1, dans lequel :
l'organe d'induction de rupture (530) est configuré pour se dilater pendant une ventilation de gaz du module de batterie, et
l'organe d'induction de rupture (530) est configuré pour se dilater afin de déformer les couches de rupture, et un trou de ventilation (550) est formé sur la feuille de rupture (500).

4. Module de batterie (100) selon la revendication 3, dans lequel :
l'organe d'induction de rupture (530) est configuré pour se dilater lorsque l'alliage à mémoire de forme se dilate.

5. Module de batterie (100) selon la revendication 3, dans lequel :
le trou de ventilation (550) est formé en nombres pluriels.

6. Module de batterie (100) selon la revendication 5, dans lequel :
la pluralité de trous de ventilation (550) sont formés dans une partie de la feuille de rupture correspondant à la position du trou (210), et
la pluralité de trous de ventilation (550) formés dans la partie de la feuille de rupture (500) correspondant à la position du trou est configurée pour former une partie de ventilation (501).

7. Module de batterie (100) selon la revendication 1, dans lequel :
l'organe d'induction de rupture (530) est configuré pour se dilater lorsqu'une température de 100 degrés ou plus est appliquée à l'organe d'induction de rupture (530).

8. Module de batterie (100) selon la revendication 1, dans lequel :
le cadre de module (200) comporte un cadre en forme de U (300) qui est ouvert au niveau d'une surface supérieure, d'une surface avant et d'une surface arrière et recouvre une partie inférieure et deux parties latérales de l'empilement de cellules de batterie (120), et une plaque supérieure (400) est configurée pour recouvrir la partie supérieure de l'empilement de cellules de batterie (120), et
dans lequel la feuille de rupture (500) est formée entre la partie supérieure de l'empilement de cellules de batterie (120) et le cadre de module (200).

9. Bloc-batterie comprenant le module de batterie (100) selon la revendication 1.
